# EUROPEAN PATENT SPECIFICATION

(11) **EP 4 099 601 B1**
(45) Date of publication and mention of the grant of the patent: **07.05.2025**
(21) Application number: 21754594.6
(22) Date of filing: 15.01.2021
(51) Int. Cl.: H04L 5/00, H04W 72/04

(54) **RESOURCE CONFIGURATION INDICATION METHOD, TERMINAL DEVICE, AND STORAGE MEDIUM**
VERFAHREN ZU ANZEIGE EINER RESSOURCENKONFIGURATION, ENDGERÄT UND SPEICHERMEDIUM
PROCÉDÉ D'INDICATION DE CONFIGURATION DE RESSOURCES, DISPOSITIF DE TERMINAL ET SUPPORT DE STOCKAGE

(30) Priority: 14.02.2020 CN 202010093676
(43) Date of publication of application: 07.12.2022
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: WU, Dan, Beijing 100053 (CN); XIA, Liang, Beijing 100053 (CN); ZHANG, Yi, Beijing 100053 (CN); ZHANG, Jingwen, Beijing 100053 (CN); LIU, Jianjun, Beijing 100053 (CN)
(74) Representative: J A Kemp LLP
(86) International application number: PCT/CN2021/072213
(87) International publication number: WO 2021/159917

(56) References cited:
- EP-A1- 3 547 595
- WO-A1-2020/024868
- CN-A- 101 572 896
- CN-A- 111 245 585
- US-A1- 2019 349 900
- CMCC: "Remaining issues on sidelink synchronization mechanisms", 3GPP TSG RAN WG1 #100, R1-2000748, 6 March 2020 (2020-03-06), XP051853439
- ZTE ET AL.: "NR sidelink physical layer structure", 3GPP TSG RAN WG1 #98BIS, R1-1910297, 20 October 2019 (2019-10-20), XP051789102
- ZTE ET AL.: "NR sidelink physical layer structure", 3GPP TSG RAN WG1 #99, R1-1912514, 22 November 2019 (2019-11-22), XP051823454
- VIVO: "Physical layer structure for NR sidelink", 3GPP TSG RAN WG1 #99 MEETING, R1-1912020, 22 November 2019 (2019-11-22), XP051823162

## Description

### CROSS-REFERENCE TO RELATED APPLICATION

The present disclosure is based on and claims priority to Chinese patent application No. 202010093676.5, filed on February 14, 2020.

### TECHNICAL FIELD

The present disclosure relates to a wireless communication technology, in particular to a resource configuration indication method, a terminal device, and a computer-readable storage medium.

### BACKGROUND

In Internet of Vehicles, synchronization between terminals is achieved by sending a SideLink (SL) Synchronization Signal and PBCH Block (SSB). The SSB includes S-PSS (Sidelink-Primary Synchronization Signals), S-SSS (Sidelink-Secondary Synchronization Signals) and PSBCH (Physical Sidelink Broadcast CHannel). Herein, the PSBCH may carry information of Time Division Duplex (TDD) configuration to indicate the SL to transmit resources.

Considering information such as period, the number of uplink time slots, and the number of uplink symbols, the number of bits required in the dual-period configuration is too large, so that the number of bits of the PSBCH is also too large, and the coverage of the SL SSB is affected. Related technologies can at least be found in Patent documents US 2019/349900A1and EP 3547595A1. Patent document US 2019/349900A1 provides techniques for wireless communication. An exemplary method generally includes receiving an indication of a modulation and coding scheme (MCS) to use for transmitting information. The indication of the MCS indicates an MCS index value corresponding to an entry in an MCS lookup table. A transport block size (TBS) is determined, based on the MCS index value, to use for transmitting the information. Herein, determining the TBS comprises receiving an explicit indication of the TBS to use for transmitting the information, and transmitting the information using the MCS and TBS. Patent document EP 3547595A1 relates to wireless communication networks, and more particularly, to a method and apparatus for slot format determination in a wireless communication system. The method includes that the UE receives a configuration for monitoring downlink control information (DCI) indicative of a slot format. The configuration indicates the UE to monitor a first DCI in a first monitoring occasion associated with a slot and to monitor a second DCI in a second monitoring occasion. The first DCI is indicative of the slot format. Configured transmission and/or configured reception may be performed on one or more symbols when the first DCI is not received in the first monitoring occasion, the second DCI is received in the second monitoring occasion and the second DCI is indicative of the slot format for the slot.

### SUMMARY

Embodiments of the present disclosure are intended to provide a resource configuration indication method, a terminal device, and a storage medium. The invention is set out in the appended set of claims.

Through the adoption of the technical solutions of the embodiments of the present disclosure, the terminal device sends the time domain resource indication information configured to indicate the transmission period and the number of time domain resource units to indicate transmission resources of the SL, so that the number of bits required for the time domain resource indication information is greatly reduced, and then the number of bits required for the PSBCH is reduced, thereby avoiding affecting the coverage of the SL SSB.

### BRIEF DESCRIPTION OF THE DRAWINGS

FIG. 1 is a schematic diagram of a communication system architecture according to an embodiment of the present disclosure.
FIG. 2 is a schematic flowchart of a resource configuration indication method according to an embodiment of the present disclosure.
FIG. 3 is a composition structure diagram of a terminal device according to an embodiment of the present disclosure.
FIG. 4 is a composition structure diagram of hardware of a terminal device according to an embodiment of the present disclosure, which is not covered by the claims.

### DETAILED DESCRIPTION

The present disclosure is elaborated in detail below with reference to the drawings and specific embodiments.

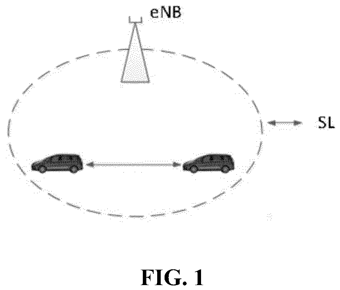

FIG. 1 is a schematic diagram of a communication system architecture according to an embodiment of the present disclosure. As shown in FIG. 1, a resource configuration indication method in the embodiment of the present disclosure may be applied to Internet of Vehicles, and the Internet of Vehicles realizes wireless communication based on various mobile communication systems. For example, the mobile communication system may be a General Packet Radio Service (GPRS), a Long Term Evolution (LTE) system or a 5G system.

Exemplarily, the communication system may include a network device and a terminal device, and the network device may be a device communicating with the terminal device. The network device may provide communication coverage for a specific geographic area, and may communicate with the terminal device located within the coverage area. Optionally, the network device may be a base station under various mobile communication systems, such as an Evolutional Node B (eNB) in the LTE system, or a base station (gNB) in a 5G network. Optionally, the 5G network may also be referred to as a New Radio (NR) system or a NR network.

The terminal device in the embodiment may be a vehicle-mounted terminal device. Herein, a direct communication link between the terminal devices is called a SL, and the resource configuration indication method in the embodiment is exactly configured to indicate transmission resources of the SL, which includes channel transmission resources of the SL, data transmission resources of the SL, etc.

FIG. 1 exemplarily shows one network device and two terminal devices. Optionally, the communication system may include multiple network devices and the coverage of each network device may include other numbers of terminal devices, which is not limited in the embodiment of the present disclosure.

For the time domain resource configuration of a joint indication period (i.e. double period), the number of uplink time slots and the number of symbols in the related art, as shown in Table 1, the configuration information requires 21 bits. The number of bits required is too large, so that the number of bits of the PSBCH is too large, and the coverage of the SL SSB is affected.

**Table 1**

| Period 1 (ms) | Number of time slots of 120KHz | Period 2 (ms) | Number of time slots of 120KHz | Number of states=(number of times slots in period 1×number of symbols+1)×(number of times slots in period 2×number of symbols+1) |
|---|---|---|---|---|
| 0.5 | 4 | 0.5 | 4 | 3249 |
| 0.5 | 4 | 2 | 16 | 12825 |
| 1 | 8 | 1 | 8 | 12769 |
| 1 | 8 | 3 | 24 | 38081 |
| 1 | 8 | 4 | 32 | 50737 |
| 1.25 | 10 | 1.25 | 10 | 19881 |
| 2 | 16 | 2 | 16 | 50625 |
| 2 | 16 | 3 | 24 | 75825 |
| 3 | 24 | 1 | 8 | 38081 |
| 3 | 24 | 2 | 16 | 75825 |
| 2.5 | 20 | 2.5 | 20 | 78961 |
| 4 | 32 | 1 | 8 | 50737 |
| 5 | 40 | 5 | 40 | 314721 |
| 10 | 80 | 10 | 80 | 1256641 |
| Total number | | | | 1952171 |
| Number of bits | | | | 21 |

Therefore, the following embodiments of the present disclosure are provided at least based on the communication system shown in FIG. 1 and the problems shown in Table 1.

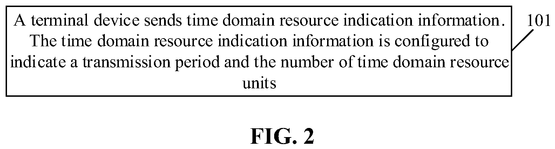

The embodiments of the present disclosure provide a resource configuration indication method. FIG. 2 is a schematic flowchart of a resource configuration indication method according to an embodiment of the present disclosure. As shown in FIG. 2, the method includes the following operations.

At S101, a terminal device sends time domain resource indication information. The time domain resource indication information may be configured to indicate a transmission period and the number of time domain resource units.

In the embodiment, the terminal device may be the terminal device shown in FIG. 1. The operation that the terminal device sends the time domain resource indication information includes that: the terminal device sends the time domain resource indication information through a PSBCH.

Exemplarily, the terminal device may send the SL SSB by a SL through broadcasting. The SL SSB includes the PSBCH, that is, the SL SSB is sent through broadcasting, and then the PSBCH is sent through broadcasting, that is, the time domain resource indication information is sent through broadcasting. Herein, time domain resources indicated by the time domain resource indication information are uplink time domain resources in a serving cell where the terminal device is located. The time domain resource indication information is configured to indicate the available transmission resources for the SL. The available transmission resources for the SL indicate that the configured resources are not conflict with downlink time domain resources in the serving cell where the terminal device is located.

In the embodiment, the time domain resource unit represents the time slot, and then the number of time domain resource units represents the number of available time slots in one transmission period. Herein, the number of available time slots is the number of available time slots for the SL.

The transmission period includes: a transmission period combination, and the number of time domain resource units is configured to indicate the number Nᵢ of available time slots in each transmission period. Herein, Nᵢ=Mᵢ*Kᵢ, Mᵢ is the number of time domain resource units, the time domain resource unit includes Kᵢ time slots, a subcarrier spacing corresponding to the Kᵢ time slots is F, and the Kᵢ is a predefined positive integer. In other embodiments, the transmission period may only include the transmission period, that is, configuration is performed for a single period.

Herein, exemplarily, if the transmission period combination includes two transmission periods, denoted as a transmission period 1 and a transmission period 2, the terminal device may first perform SL transmission within a duration corresponding to the transmission period 1 according to the available time slot represented by the corresponding time domain resource unit, and then performs SL transmission within a duration corresponding to the transmission period 2 according to the available time slot represented by the corresponding time domain resource unit. Then, the terminal device performs SL transmission within the duration corresponding to the transmission period 1 according to the available time slot represented by the corresponding time domain resource unit, then performs SL transmission within the duration corresponding to the transmission period 2 according to the available time slot represented by the corresponding time domain resource unit, and so on. Herein, exemplarily, if the configuration is performed for the single period, the two transmission periods included in the above-mentioned transmission period combination may be set to the same value.

In the embodiment, the Kᵢ is the predefined positive integer. Exemplarily, if Kᵢ=1, the time domain resource indication information may be configured to indicate one time slot included in each time domain resource unit in the period i in the transmission period combination. If Kᵢ=2, the time domain resource indication information may be configured to indicate two time slots included in each time domain resource unit in the period i in the transmission period combination. It is to be understood that, Kᵢ in the embodiment represents granularity indicated by the time domain resource indication information. For example, the time domain resource indication information indicates one time slot in the transmission period, or two time slots in the transmission period. In other embodiments, the number Ni of available time slots may also be uplink time domain resources in the serving cell where the terminal device is located, that is, available time slots for the SL. The embodiment reduces the number of bits required for the time domain resource indication information by appropriately increasing the granularity indicated by the time domain resource indication information.

It is to be understood that, according to the technical solution provided in the embodiment, the terminal device sends the time domain resource indication information including the transmission period and the number of time domain resource units, that is, the transmission period and the number of time slots are indicated by the time domain resource indication information, and the symbol-by-symbol indication in the related art is changed to the time-slot-by-slot indication of the uplink resources to indicate the transmission resources of the SL, so that the number of bits required for the time domain resource indication information is greatly reduced, and the number of bits required for the PSBCH is reduced, thereby avoiding affecting the coverage of the SL SSB.

If the transmission period combination does not belong to a first transmission period combination set, Kᵢ=1 and F is a first value. If the transmission period combination belongs to the first transmission period combination set, Kᵢ is a predefined positive integer greater than 1 and F is the first value, or, Kᵢ=1 and F is a second value. Optionally, the first value is greater than the second value. The first value is 120 KHz, and the second value is 60 KHz.

Herein, the first transmission period combination set may include at least part of the following transmission period combinations: 10ms transmission period and 10ms transmission period, 5ms transmission period and 5ms transmission period, 1ms transmission period and 4ms transmission period, 4ms transmission period and 1ms transmission period, 2ms transmission period and 3ms transmission period, 3ms transmission period and 2ms transmission period, 1ms transmission period and 3ms transmission period, 3ms transmission period and 1ms transmission period, and 2ms transmission period and 2ms transmission period.

It is to be understood that, in order to ensure the number of bits required for the time domain resource indication information, the transmission period combination included in the first transmission period combination set may select at least a part of the multiple transmission period combinations listed above, and which of the above-mentioned transmission period combinations is selected as the first transmission period combination may be determined according to actual needs, which is not repeated here.

Optionally, the first transmission period combination set is an empty set.

The embodiment may include the following scenarios: Scenario 1: in a case where the first transmission period combination set is the empty set, that is, for all transmission period combinations, in a case where the subcarrier spacing F is the number of available time slots corresponding to 120 KHz, indication is performed according to the granularity of 1 (Kᵢ=1), that is, the time domain resource indication information indicates one available time slot in the period. Scenario 2: in a case where the first transmission period combination set is not empty, and the transmission period combination does not belong to the first transmission period combination set, indication is performed according to an indication method of the scenario 1. In a case where the transmission period combination belongs to the first transmission period combination set, and the subcarrier spacing F is the number of available time slots corresponding to 120 KHz, indication is performed according to the granularity being a positive integer greater than 1, that is, the time domain resource indication information indicates more than one available time slot in the period. Or, in a case where the subcarrier spacing F is the number of available time slots corresponding to 60 KHz, since the number of available time slots corresponding to 60 KHz is half of the number of available time slots corresponding to 120 KHz in the same transmission period, indication is performed according to the granularity of 1, that is, the time domain resource indication information indicates one available time slot in the transmission period.

The above scenarios are illustrated below with examples.

### Example 1:

Referring to Table 2, the scenario only indicates the transmission period combination and the number Nᵢ of available time slots in each transmission period, the time domain resource unit includes one time slot (i.e. Kᵢ=1), and the subcarrier spacing F corresponding to the one time slot is 120KHz. The transmission period combination in the scenario includes two transmission periods, denoted as a period 1 and a period 2, the number of time slots corresponding to each transmission period is shown in Table 2 below, and the number of states corresponding to each transmission period combination refers to the last column in Table 2. Taking the period 1 of 0.5ms and the corresponding number of time slots of 4, and the period 2 of 0.5ms and the corresponding number of time slots of 4 as examples, since a case where the number of available time slots is 0 is included, the corresponding number of states is (4+1) × (4+1) =25, which indicates that 25 states are required to represent the combination of various numbers of time slots of combinations of 0.5ms and 0.5ms transmission period. A determination way of the number of states corresponding to other transmission period combinations may refer to the above-mentioned manner, which is not repeated here.

It can be seen that, for various transmission period combinations shown in Table 2, the total number of states is 11214, and 14 bits are required to represent the above 11214 states. Based on this, the number of bits of the time domain resource indication information may be compressed to 14 bits using the implementation mode of Example 1. Compared with 21 bits in the related art, the implementation mode reduces 7 bits, so that the number of bits required for the domain resource indication information is greatly reduced, and the number of bits required for the PSBCH is reduced, thereby avoiding affecting the coverage of the SL SSB.

**Table 2**

| Period 1 (ms) | Number of time slots of 120KHz | Period 2 (ms) | Number of time slots of 120KHz | Number of states=(number of times slots in period 1+1)×(number of times slots in period 2+1) |
|---|---|---|---|---|
| 0.5 | 4 | 0.5 | 4 | 25 |
| 0.625 | 5 | 0.625 | 5 | 36 |
| 0.5 | 4 | 2 | 16 | 85 |
| 1 | 8 | 1 | 8 | 81 |
| 1 | 8 | 3 | 24 | 225 |
| 1 | 8 | 4 | 32 | 297 |
| 1.25 | 10 | 1.25 | 10 | 121 |
| 2 | 16 | 2 | 16 | 289 |
| 2 | 16 | 3 | 24 | 425 |
| 3 | 24 | 1 | 8 | 225 |
| 3 | 24 | 2 | 16 | 425 |
| 2.5 | 20 | 2.5 | 20 | 441 |
| 4 | 32 | 1 | 8 | 297 |
| 5 | 40 | 5 | 40 | 1681 |
| 10 | 80 | 10 | 80 | 6561 |
| Total number | | | | 11214 |
| Number of bits | | | | 14 |

In other scenarios, in a case where the transmission period combination belongs to the first transmission period combination set, and the subcarrier spacing F is the number of available time slots corresponding to 120 KHz, indication is performed according to the granularity being a positive integer greater than 1. Taking indication according to the granularity of 2 as an example, that is, Kᵢ=2, and then the number of states = (number of time slots in period 1/2+1) × (number of time slots in period 2/+1). Assuming that the period 1 of 10ms and the period 2 of 10ms belong to the transmission period combination in the first transmission period combination set in Table 2, it may be determined that the corresponding number of states is (80/2+1) × (80/2+1) =1681. Compared with the number of states corresponding to the period 1 of 10ms and the period 2 of 10m in Table 2 being 6561, the technical solution of the embodiment may further reduce the number of states, thereby reducing the number of bits required for the time domain resource indication information.

In some optional embodiments of the present disclosure, which are not covered by the claims, if the transmission period combination does not belong to the first transmission period combination set, Kᵢ=1 and F is the first value. If the transmission period combination belongs to the first transmission period combination set, and the first transmission period and the second transmission period in the transmission period combination are the same, Kᵢ is a predefined positive integer greater than 1 and F is the first value, or, Kᵢ=1 and F is the second value. If the transmission period combination belongs to the first transmission period combination set, and the first transmission period and the second transmission period in the transmission period combination are different, K₁ corresponding to the first transmission period is equal to 1 and F is the first value, K₂ corresponding to the second transmission period is a predefined positive integer greater than 1 and F is the first value, or, K₂ corresponding to the second transmission period is equal to 1 and F is the second value. Herein, the first transmission period is less than the second transmission period. Optionally, the first value is greater than the second value.The first value is 120 KHz, and the second value is 60 KHz.

Optionally, the first transmission period combination set is the empty set.

In the implementation mode, on the basis of indicating the number of uplink time slots, in order to further compress the time domain configuration information, it is considered that the indication granularity is increased for a larger transmission period combination or a larger transmission period in the transmission period combination. In a case where the subcarrier spacing F is the number of available time slots corresponding to 120 KHz, indication is performed by taking the predefined positive integer F greater than 1 as the granularity, that is, the time domain resource indication information indicates more than one available time slot in the transmission period. Or, in a case where the subcarrier spacing F is the number of available time slots corresponding to 60 KHz, indication is performed according to the granularity of 1 (Kᵢ=1), that is, the time domain resource indication information indicates one available time slot in the transmission period.

The embodiment may include the following scenarios: Scenario 1: in a case where the first transmission period combination set is the empty set, that is, for all transmission period combinations, in a case where the subcarrier spacing F is the number of available time slots corresponding to 120 KHz, indication is performed according to the granularity of 1 (Kᵢ=1), that is, the time domain resource indication information indicates one available time slot in the period. For details of the scenario, reference may be made to the above-mentioned Example 1, which is not repeated here. Scenario 2: in a case where the first transmission period combination set is not empty, the transmission period combination belongs to the first transmission period combination set, the first transmission period and the second transmission period in the transmission period combination are the same, and the subcarrier spacing F is the number of available time slots corresponding to 120 KHz, indication is performed according to the granularity being a positive integer greater than 1, that is, the time domain resource indication information indicates more than one available time slot in the period. Or, in a case where the subcarrier spacing F is the number of available time slots corresponding to 60 KHz, indication is performed according to the granularity of 1 (Kᵢ=1), that is, the time domain resource indication information indicates one available time slot in the transmission period. Scenario 3: in a case where the first transmission period combination set is not empty, the transmission period combination belongs to the first transmission period combination set, and the first transmission period is smaller than the second transmission period in the transmission period combination, when the subcarrier spacing F is the number of available time slots corresponding to 120 KHz for the first transmission period, indication is performed according to the granularity of 1 (Kᵢ=1), that is, the time domain resource indication information indicates one available time slot in the period, and when the subcarrier spacing F is the number of available time slots corresponding to 120 KHz for the second transmission period, indication is performed according to the granularity being a positive integer greater than 1, that is, the time domain resource indication information indicates more one available time slot in the period. Or, in a case where the subcarrier spacing F is the number of available time slots corresponding to 60 KHz, indication is performed according to the granularity of 1 (Kᵢ=1), that is, the time domain resource indication information indicates one available time slot in the transmission period.

Herein, the first transmission period combination set includes at least part of the following transmission period combinations: 10ms transmission period and 10ms transmission period, 5ms transmission period and 5ms transmission period, 1ms transmission period and 4ms transmission period, 4ms transmission period and 1ms transmission period, 2ms transmission period and 3ms transmission period, 3ms transmission period and 2ms transmission period, 1ms transmission period and 3ms transmission period, 3ms transmission period and 1ms transmission period, and 2ms transmission period and 2ms transmission period.

### The above scenarios are illustrated below with examples.

### Example 2

Referring to Table 3, the scenario only indicates the transmission period combination and the number Nᵢ of available time slots in each transmission period, the time domain resource unit includes one or two time slots, and the subcarrier spacing F corresponding to the time slot is 120KHz. The transmission period combination in the scenario includes two transmission periods, denoted as the period 1 and the period 2, the number of time slots corresponding to each transmission period is shown in Table 2 below, and the number of states corresponding to each transmission period combination refers to the last column in Table 3.

The example is suitable for the above Scenario 2 and the above Scenario 3. In the above scenario 2, for the transmission period combination belonging to the first transmission period combination set, in the scenario where the first transmission period and the second transmission period are the same, that is, the period 1 and the period 2 are the same, for example, the 10ms transmission period and 10ms transmission period, 5ms transmission period and 5ms transmission period, etc., in a case where the subcarrier spacing F is the number of available time slots corresponding to 120 KHz, indication is performed according to the granularity being a positive integer greater than 1, that is, the domain resource indication information indicates more than one available time slot in the period. Or, in a case where the subcarrier spacing F is the number of available time slots corresponding to 60 KHz, indication is performed according to the granularity of 1, that is, the domain resource indication information indicates one available slot in the transmission period. For example, the number of states corresponding to the period 1 of 10ms and the period 2 of 10ms is (80/2+1) × (80/2+1) =1681.

In the above scenario 3, for the transmission period combination in the first transmission period combination set, in the scenario where the first transmission period and the second transmission period are different, for example: 1ms transmission period and 4ms transmission period, 4ms transmission period and 1ms transmission period, 2ms transmission period and 3ms transmission period, 3ms transmission period and 2ms transmission period, etc., for the smaller first transmission period, in a case where the subcarrier spacing F is the number of available time slots corresponding to 120 KHz, indication is performed according to the granularity of 1, that is, the time domain resource indication information indicates one available time slot in the transmission period. For the larger second transmission period, the subcarrier spacing F is the number of available time slots corresponding to 120 KHz, indication is performed according to the granularity being a positive integer greater than 1, that is, the time domain resource indication information indicates more than one available time slot in the period. Or, in a case where the subcarrier spacing F is the number of available time slots corresponding to 60 KHz, indication is performed according to the granularity of 1, that is, the domain resource indication information indicates one available slot in the transmission period. For example, the number of states corresponding to the period 1 of 1ms and the period 2 of 4ms is (8+1) × (32/2+1) =153. For another example, the number of states corresponding to the period 1 of 3ms and the period 2 of 2ms is (24/2+1) × (16+1) =221.

It can be seen that, for various transmission period combinations shown in Table 3, the total number of states is 3862, and 12 bits are required to represent the above 3862 states. Based on this, the number of bits of the time domain resource indication information may be compressed to 12 bits using the implementation mode of Example 2. Compared with 21 bits in the related art, the implementation mode reduces 9 bits, so that the number of bits required for the domain resource indication information is greatly reduced, and the number of bits required for the PSBCH is reduced, thereby avoiding affecting the coverage of the SL SSB.

It is to be understood that, in order to ensure that the number of bits required for the time domain resource indication information is 12, the transmission period combination included in the first transmission period combination set may select at least a part of the multiple transmission period combinations listed above, and which of the above-mentioned transmission period combinations is selected as the first transmission period combination may be determined according to actual needs, which is not repeated here. Exemplarily, the period 1 of 2ms and the period 2 of 2ms shown in Table 3 are not in the first transmission period combination set.

**Table 3**

| Period 1 (ms) | Number of time slots of 120KHz | Period 2 (ms) | Number of time slots of 120KHz | Number of states |
|---|---|---|---|---|
| 0.5 | 4 | 0.5 | 4 | 25 |
| 0.625 | 5 | 0.625 | 5 | 36 |
| 0.5 | 4 | 2 | 16 | 85 |
| 1 | 8 | 1 | 8 | 81 |
| 1 | 8 | 3 | 24 | 117 |
| 1 | 8 | 4 | 32 | 153 |
| 1.25 | 10 | 1.25 | 10 | 121 |
| 2 | 16 | 2 | 16 | 289 |
| 2 | 16 | 3 | 24 | 221 |
| 3 | 24 | 1 | 8 | 117 |
| 3 | 24 | 2 | 16 | 221 |
| 2.5 | 20 | 2.5 | 20 | 441 |
| 4 | 32 | 1 | 8 | 153 |
| 5 | 40 | 5 | 40 | 441 |
| 10 | 80 | 10 | 80 | 1681 |
| Total number | | | | 3862 |
| Number of bits | | | | 12 |

In some optional embodiments of the present disclosure, if a frequency point of the serving cell where the terminal device is located is less than or equal to 6GHz or a subcarrier spacing f of the SL SSB carrying the time domain resource indication information is less than or equal to a preset subcarrier spacing f1, Kᵢ=1 and F is the second value. If the frequency point of the serving cell where the terminal device is located is greater than 6GHz or the subcarrier spacing f of the SL SSB carrying the time domain resource indication information is greater than the preset subcarrier spacing f1, Kᵢ=f/f1 and F is the first value, or, Kᵢ=1 and F is the second value. Optionally, the first value is greater than the second value. The first value is 120 KHz, and the second value is 60 KHz. Optionally, the preset subcarrier spacing f1 is equal to 60KHz.

In the embodiment, indication may be performed based on whether the frequency point of the serving cell where the terminal device is located is greater than 6GHz, or based on the difference in the size of the subcarrier spacing f of the SL SSB carrying the time domain resource indication information, and specifically based on the comparison of the above subcarrier spacing f and the preset subcarrier interval f1 according to different subcarrier spacing or the number of available time slots corresponding to a comparison result between the frequency point of the serving cell where the terminal device is located and 6GHz.

Herein, the preset subcarrier spacing f1 is equal to 60KHz. Then, in a case where the frequency point of the serving cell where the terminal device is located is less than or equal to 6GHz, or, the subcarrier spacing f of the SL SSB carrying the time domain resource indication information is less than or equal to 60KHz, indication is performed according to the granularity corresponding to the low frequency band, that is, the number of available time slots corresponding to 60 KHz. It is to be understood that in a case where the subcarrier spacing F is the number of available time slots corresponding to 60 KHz, indication is performed according to the granularity of 1 (i.e. Kᵢ=1), that is, the domain resource indication information indicates one available time slot in the transmission period. In a case where the frequency point of the serving cell where the terminal device is located is greater than 6GHz, or, the subcarrier spacing f of the SL SSB carrying the time domain resource indication information is greater than 60KHz, it is to be understood that, the subcarrier spacing f of the SL SSB carrying the time domain resource indication information is 120KHz, an implementation mode is that indication is performed according to the granularity corresponding to the low frequency band, and in a case where the subcarrier spacing F is the number of available time slots corresponding to 60 KHz, indication is performed according to the granularity of 1 (i.e. Kᵢ=1), that is, the domain resource indication information indicates one available time slot in the transmission period. Another implementation mode is that indication is performed according to the granularity corresponding to the high frequency band, and in a case where the subcarrier spacing F is the number of available time slots corresponding to 120 KHz, indication is performed according to the granularity of f/f1=120/60=2 (i.e. Kᵢ=2), that is, the domain resource indication information indicates two available time slots in the period.

In some optional embodiments of the present disclosure, if the frequency point of the serving cell where the terminal device is located is less than or equal to 6GHz or the subcarrier spacing f of a SL SSB carrying the time domain resource indication information is less than or equal to the preset subcarrier spacing f1, Kᵢ=1 and F is the second value. If the frequency point of the serving cell where the terminal device is located is greater than 6GHz or the subcarrier spacing f of the SL SSB carrying the time domain resource indication information is greater than the preset subcarrier spacing f1, and the transmission period combination does not belong to the first transmission period combination set, Kᵢ=1 and F is the first value. If the frequency point of the serving cell where the terminal device is located is greater than 6GHz or the subcarrier spacing f of the SL SSB carrying the time domain resource indication information is greater than the preset subcarrier spacing f1, and the transmission period combination belongs to the first transmission period combination set, Kᵢ=f/f1 and F is the first value, or, Kᵢ=1 and F is the second value. Herein, the first value is greater than the second value. The first value is 120 KHz, and the second value is 60 KHz. Optionally, the preset subcarrier spacing f1 is equal to 60KHz. It is to be understood that, if the frequency point of the serving cell where the terminal device is located is greater than 6GHz and the transmission period combination does not belong to the first transmission period combination set, Kᵢ=1 and F is the first value. If the subcarrier spacing f of the SL SSB carrying the time domain resource indication information is greater than the preset subcarrier spacing f1, and the transmission period combination does not belong to the first transmission period combination set, Kᵢ=1 and F is the first value. If the frequency point of the serving cell where the terminal device is located is greater than 6GHz and the transmission period combination belongs to the first transmission period combination set, Kᵢ=f/f1 and F is the first value, or, Kᵢ=1 and F is the second value. If the subcarrier spacing f of the SL SSB carrying the time domain resource indication information is greater than the preset subcarrier spacing f1, and the transmission period combination belongs to the first transmission period combination set, Kᵢ=f/f1 and F is the first value, or, Kᵢ=1 and F is the second value.

### Optionally, the first transmission period combination set is the empty set.

It is to be noted that, in the implementation mode, in a case where the frequency point of the serving cell where the terminal device is located is less than or equal to than 6GHz, or the subcarrier spacing f of the SL SSB carrying the time domain resource indication information is less than or equal to 60KHz, indication is performed according to the granularity corresponding to the low frequency band, and in a case where the subcarrier spacing F is the number of available time slots corresponding to 60 KHz, indication is performed according to the granularity of 1 (i.e. Kᵢ=1), that is, the domain resource indication information indicates one available time slot in the transmission period. In a case where the frequency point of the serving cell where the terminal device is located is greater than 6GHz, or the subcarrier spacing f of the SL SSB carrying the time domain resource indication information is greater than 60KHz, reference is made to the case where the subcarrier spacing F is the number of available time slots corresponding to 120 KHz, and the specific implementation mode may refer to the above-mentioned embodiments and Table 2, which is not repeated here.

In some optional embodiments of the present disclosure, if the frequency point of the serving cell where the terminal device is located is less than or equal to 6GHz or the subcarrier spacing f of the SL SSB carrying the time domain resource indication information is less than or equal to the preset subcarrier spacing f1, Kᵢ=1 and F is the second value. If the frequency point of the serving cell where the terminal device is located is greater than 6GHz or the subcarrier spacing f of the SL SSB carrying the time domain resource indication information is greater than the preset subcarrier spacing f1, and the transmission period combination does not belong to the first transmission period combination set, Kᵢ=1 and F is the first value. If the frequency point of the serving cell where the terminal device is located is greater than 6GHz or the subcarrier spacing f of the SL SSB carrying the time domain resource indication information is greater than the preset subcarrier spacing f1, the transmission period combination belongs to the first transmission period combination set, and the first transmission period and the second transmission period in the transmission period combination are the same, Kᵢ=f/f1 and F is the first value, or, Kᵢ=1 and F is the second value. If the frequency point of the serving cell where the terminal device is located is greater than 6GHz or the subcarrier spacing f of the SL SSB carrying the time domain resource indication information is greater than the preset subcarrier spacing f1, the transmission period combination belongs to the first transmission period combination set, and the first transmission period and the second transmission period in the transmission period combination are different, K₁ corresponding to the first transmission period is equal to 1and F is the first value, K₂ corresponding to the second transmission period is equal to f/f1 and F is the first value, or, K₂ corresponding to the second transmission period is equal to1 and F is the second value. Herein, the first transmission period is less than the second transmission period. Optionally, the preset subcarrier spacing f1 is equal to 60KHz.

It is to be understood that, if the frequency point of the serving cell where the terminal device is located is greater than 6GHz and the transmission period combination does not belong to the first transmission period combination set, Kᵢ=1 and F is the first value. If the subcarrier spacing f of the SL SSB carrying the time domain resource indication information is greater than the preset subcarrier spacing f1, and the transmission period combination does not belong to the first transmission period combination set, Kᵢ=1 and F is the first value. If the frequency point of the serving cell where the terminal device is located is greater than 6GHz, the transmission period combination belongs to the first transmission period combination set and the first transmission period and the second transmission period in the transmission period combination are the same, Kᵢ=f/f1 and F is the first value, or, Kᵢ=1 and F is the second value. If the subcarrier spacing f of the SL SSB carrying the time domain resource indication information is greater than the preset subcarrier spacing f1, the transmission period combination belongs to the first transmission period combination set, and the first transmission period and the second transmission period in the transmission period combination are the same, Kᵢ=f/f1 and F is the first value, or, Kᵢ=1 and F is the second value. If the frequency point of the serving cell where the terminal device is located is greater than 6GHz, the transmission period combination belongs to the first transmission period combination set, and the first transmission period and the second transmission period in the transmission period combination are the same, Kᵢ=f/f1 and F is the first value, or, Kᵢ=1 and F is the second value. If the subcarrier spacing f of the SL SSB carrying the time domain resource indication information is greater than the preset subcarrier spacing f1, the transmission period combination belongs to the first transmission period combination set, and the first transmission period and the second transmission period in the transmission period combination are the same, Kᵢ=f/f1 and F is the first value, or, Kᵢ=1 and F is the second value. If the frequency point of the serving cell where the terminal device is located is greater than 6GHz, the transmission period combination belongs to the first transmission period combination set, and the first transmission period and the second transmission period in the transmission period combination are different, K₁ corresponding to the first transmission period is equal to 1 and F is the first value, K₂ corresponding to the second transmission period is equal to f/f1 and F is the first value, or, K₂ corresponding to the second transmission period is equal to1 and F is the second value. If the subcarrier spacing f of the SL SSB carrying the time domain resource indication information is greater than the preset subcarrier spacing f1, the transmission period combination belongs to the first transmission period combination set, and the first transmission period and the second transmission period in the transmission period combination are different, K₁ corresponding to the first transmission period is equal to 1 and F is the first value, K₂ corresponding to the second transmission period is equal to f/f1, and F is the first value, or, K₂ corresponding to the second transmission period is equal to 1 and F is the second value.

It is to be noted that, in the implementation mode, in a case where the frequency point of the serving cell where the terminal device is located is less than or equal to 6GHz, or the subcarrier spacing f of the SL SSB carrying the time domain resource indication information is less than or equal to 60KHz, indication is performed according to the granularity corresponding to the low frequency band, and in a case where the subcarrier spacing F is the number of available time slots corresponding to 60KHz, indication is performed according to the granularity of 1 (i.e. Kᵢ=1), that is, the domain resource indication information indicates one available time slot in the transmission period. In a case where the frequency point of the serving cell where the terminal device is located is greater than 6GHz, or the subcarrier spacing f of the SL SSB carrying the time domain resource indication information is greater than 60KHz, reference is made to the case where the subcarrier spacing F is the number of available time slots corresponding to 120 KHz, and the specific implementation mode may refer to the above-mentioned embodiments and Table 3, which is not repeated here.

Optionally, the first transmission period combination set may include at least part of the following transmission period combinations: 10ms transmission period and 10ms transmission period, 5ms transmission period and 5ms transmission period, 1ms transmission period and 4ms transmission period, 4ms transmission period and 1ms transmission period, 2ms transmission period and 3ms transmission period, 3ms transmission period and 2ms transmission period, 1ms transmission period and 3ms transmission period, 3ms transmission period and 1ms transmission period, and 2ms transmission period and 2ms transmission period.

It is to be understood that, in order to ensure the number of bits required for the time domain resource indication information, the transmission period combination included in the first transmission period combination set may select at least a part of the multiple transmission period combinations listed above, and which of the above-mentioned transmission period combinations is selected as the first transmission period combination may be determined according to actual needs, which is not repeated here.

In some optional embodiments of the present disclosure, the number of time domain resource units is also configured to indicate the number of available symbols in the transmission period corresponding to the number of available time slots being 0. It is to be understood that, the resource indication information is configured to indicate the transmission period combination, the number Nᵢ of available time slots in each transmission period, and the number of available symbols in the transmission period corresponding to the number of available time slots being 0. Herein, the available symbols corresponding to the number of available symbols are uplink symbols.

As a first implementation mode, the number of available symbols includes one of the following: 13, 12, 11, 10, 9, 8, 7, and less than 7. Exemplarily, in a case where the number of available time slots is 0, the following eight cases may also be included: 0 time slot + 13 symbols, 0 time slot + 12 symbols, ... 0 time slot + 7 symbols and 0 time slot + less than 7 symbols.

Based on this, in the embodiment, the number of states corresponding to the transmission period combination= (the number of time slots in the period 1+8) × (the number of time slots in the period 2+8).

The above scenarios are illustrated below with examples.

### Example 3

Referring to Table 4, the scenario indicates the transmission period combination, the number Ni of available time slots in each transmission period, and the number of available symbols in the transmission period corresponding to the number of available time slots being 0, the time domain resource unit includes one time slots (i.e. Kᵢ=1), and the subcarrier spacing F corresponding to one time slot is 120KHz. The transmission period combination in the scenario includes two transmission periods, denoted as a period 1 and a period 2, the number of time slots corresponding to each transmission period is shown in Table 4 below, and the number of states corresponding to each transmission period combination refers to the last column in Table 4.

It can be seen that, for various transmission period combinations shown in Table 4, the total number of states is 16429, and 15 bits are required to represent the above 16429 states. Based on this, the number of bits of the time domain resource indication information may be compressed to 15 bits using the implementation mode of Example 3. Compared with 21 bits in the related art, the implementation mode reduces 6 bits, based on the above-mentioned embodiments, the indication granularity of the time domain resource indication information is also improved through indication of the symbol.

**Table 4**

| Period 1 (ms) | Number of time slots of 120KHz | Period 2 (ms) | Number of time slots of 120KHz | Number of states=(number of time slots in period 1+8)×(number of time slots in period 2+8) |
|---|---|---|---|---|
| 0.5 | 4 | 0.5 | 4 | 144 |
| 0.625 | 5 | 0.625 | 5 | 169 |
| 0.5 | 4 | 2 | 16 | 288 |
| 1 | 8 | 1 | 8 | 256 |
| 1 | 8 | 3 | 24 | 512 |
| 1 | 8 | 4 | 32 | 640 |
| 1.25 | 10 | 1.25 | 10 | 324 |
| 2 | 16 | 2 | 16 | 576 |
| 2 | 16 | 3 | 24 | 768 |
| 3 | 24 | 1 | 8 | 512 |
| 3 | 24 | 2 | 16 | 768 |
| 2.5 | 20 | 2.5 | 20 | 784 |
| 4 | 32 | 1 | 8 | 640 |
| 5 | 40 | 5 | 40 | 2304 |
| 10 | 80 | 10 | 80 | 7744 |
| Total number | | | | 16429 |
| Number of bits | | | | 15 |

As a second implementation mode, based on the above-mentioned first implementation mode, the indication granularity is increased. It is to be understood that, Kᵢ is a predefined positive integer greater than 1 and F is the first value, or, Kᵢ=1 and F is the second value, and the number of available symbols includes one of the following: 13, 12, 11, 10, 9, 8, 7, and less than 7. Exemplarily, in a case where the number of available time slots is 0, the following eight cases may also be included: 0 time slot + 13 symbols, 0 time slot + 12 symbols, ... 0 time slot + 7 symbols and 0 time slot + less than 7 symbols.

Based on this, in the embodiment, the number of states corresponding the transmission period combination = (the number of time slots in the period 1/2+8) × (the number of time slots in the period 2/2+8).

The above scenarios are illustrated below with examples.

### Example 4

Referring to Table 5, the scenario indicates the transmission period combination, the number Nᵢ of available time slots in each transmission period, and the number of available symbols in the transmission period corresponding to the number of available time slots being 0, the time domain resource unit includes two time slots (i.e. Kᵢ=2), and the subcarrier spacing F corresponding to two time slots is 120KHz. The transmission period combination in the scenario includes two transmission periods, denoted as a period 1 and a period 2, the number of time slots corresponding to each transmission period is shown in Table 5 below, and the number of states corresponding to each transmission period combination refers to the last column in Table 5.

It can be seen that, for various transmission period combinations shown in Table 5, the total number of states is 6058, and 13 bits are required to represent the above 6058 states. Based on this, the number of bits of the time domain resource indication information may be compressed to 13 bits using the implementation mode of Example 4. Compared with 21 bits in the related art, the implementation mode reduces 8 bits, based on the above-mentioned embodiments, the indication granularity of the time domain resource indication information is also improved to a certain extent through indication of the symbol.

**Table 5**

| Period 1 (ms) | Number of time slots of 120KHz | Period 2 (ms) | Number of time slots of 120KHz | Number of states=(number of time slots in period 1/2+8)×(number of time slots in period 2/2+8) |
|---|---|---|---|---|
| 0.5 | 4 | 0.5 | 4 | 100 |
| 0.625 | 5 | 0.625 | 5 | 121 |
| 0.5 | 4 | 2 | 16 | 160 |
| 1 | 8 | 1 | 8 | 144 |
| 1 | 8 | 3 | 24 | 240 |
| 1 | 8 | 4 | 32 | 288 |
| 1.25 | 10 | 1.25 | 10 | 169 |
| 2 | 16 | 2 | 16 | 256 |
| 2 | 16 | 3 | 24 | 320 |
| 3 | 24 | 1 | 8 | 240 |
| 3 | 24 | 2 | 16 | 320 |
| 2.5 | 20 | 2.5 | 20 | 324 |
| 4 | 32 | 1 | 8 | 288 |
| 5 | 40 | 5 | 40 | 784 |
| 10 | 80 | 10 | 80 | 2304 |
| Total number | | | | 6058 |
| Number of bits | | | | 13 |

As a third implementation mode, based on the above-mentioned second implementation mode, the time domain resource indication information is compressed to 13 bits through increasing the indication granularity. In the implementation mode, the granularity for symbol indication is further increased. In some embodiments, the number of available symbols includes one of: 13, 10, and less than 7. Exemplarily, in a case where the number of available time slots is 0, the following three cases may also be included: 0 time slot + 13 symbols, 0 time slot + 10 symbols, and 0 time slot + less than 7 symbols. In other embodiments, the number of available symbols may also be other symbol number combinations corresponding to the three states, and is not limited to the above-mentioned symbol number combinations of 13, 10, and less than 7. In the embodiment, the specific form of the available symbol number combination is not limited.

Based on this, in the embodiment, the number of states = (the number of time slots in the period 1/2+3) × (the number of time slots in the period 2/2+3)

The above scenarios are illustrated below with examples.

### Example 5

Referring to Table 6, the scenario indicates the transmission period combination, the number Nᵢ of available time slots in each transmission period, and the number of part of available symbols in the transmission period corresponding to the number of available time slots being 0, the time domain resource unit includes two time slots (i.e. Kᵢ=2), and the subcarrier spacing F corresponding to two time slots is 120KHz. The transmission period combination in the scenario includes two transmission periods, denoted as a period 1 and a period 2, the number of time slots corresponding to each transmission period is shown in Table 6 below, and the number of states corresponding to each transmission period combination refers to the last column in Table 6.

It can be seen that, for various transmission period combinations shown in Table 6, the total number of states is 3703, and 12 bits are required to represent the above 3703 states. Based on this, the number of bits of the time domain resource indication information may be compressed to 12 bits using the implementation mode of Example 5, so that the number of bits required for the time domain resource indication information is greatly reduced, and the number of bits required for the PSBCH is reduced, thereby avoiding affecting the coverage of the SL SSB. Compared with 21 bits in the related art, the implementation mode reduces 9 bits, based on the above-mentioned embodiments, the indication granularity of the time domain resource indication information is also improved to a certain extent through indication of part of symbols.

**Table 6**

| Period 1 (ms) | Number of time slots of 120KHz | Period 2 (ms) | Number of time slots of 120KHz | Number of states=(number of time slots in period 1/2+3)×(number of time slots in period 2/2+3) |
|---|---|---|---|---|
| 0.5 | 4 | 0.5 | 4 | 25 |
| 0.625 | 5 | 0.625 | 5 | 36 |
| 0.5 | 4 | 2 | 16 | 55 |
| 1 | 8 | 1 | 8 | 49 |
| 1 | 8 | 3 | 24 | 105 |
| 1 | 8 | 4 | 32 | 133 |
| 1.25 | 10 | 1.25 | 10 | 64 |
| 2 | 16 | 2 | 16 | 121 |
| 2 | 16 | 3 | 24 | 165 |
| 3 | 24 | 1 | 8 | 105 |
| 3 | 24 | 2 | 16 | 165 |
| 2.5 | 20 | 2.5 | 20 | 169 |
| 4 | 32 | 1 | 8 | 133 |
| 5 | 40 | 5 | 40 | 529 |
| 10 | 80 | 10 | 80 | 1849 |
| Total number | | | | 3703 |
| Number of bits | | | | 12 |

It is to be understood that, in the embodiment of the present disclosure, the time domain resource indication information configured to indicate the transmission period and the number of time domain resource units may be represented by a bit value representing the corresponding transmission period and the number of time domain resource units. Exemplarily, by taking the number of bits of 14 shown in Table 2 as an example, various values in the 14 bits may correspond to various transmission period combinations and the combinations of the numbers of time slots in each transmission period combination in Table 2. The bit values corresponding to various transmission period combinations and the combinations of the numbers of time slots in each transmission period combination may be realized through a mapping table, so that the terminal device may determine state identifiers corresponding to the transmission period combination and the number Nᵢ of available time slots in each transmission period in the time domain resource indication information by looking up the mapping table, and then determine the corresponding bit value according to the state identifier.

In the Internet of Vehicles, the terminal device determines resources through signaling or pre-configuration sent by the base station (such as the eNB in FIG. 1), and then determines the actual available resources for the SL based on the resources. Based on this, in a case where the time domain resource indication information is configured to indicate the transmission period combination and the number Nᵢ of available time slots in each transmission period, that is, the granularity indicated by the time domain resource indication information is the time slot, the case of indicating 0 time slot only indicates that there is no completely available time slot. At this time, the terminal device can determine the time domain resources actually available for the SL according to the resources configured by the PSSCH, that is, it only needs to ensure that the resources configured by the PSSCH do not conflict with the time domain resource indication information.

In a case where the time domain resource indication information is configured to indicate the transmission period combination, the number Nᵢ of available time slots in each transmission period, and the number of available symbols in the transmission period corresponding to the number of available time slots being 0, for the case of indicating 0 time slot + the number of available symbols, the terminal device on the receiving side needs to determine the resources actually available for the SL according to the intersection between the resources configured by the PSSCH and the resources indicated in the PSBCH (the time domain resources indicated by the time domain resource indication information).

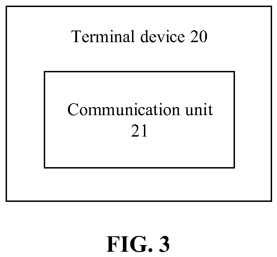

In order to implement the method of the embodiment of the present disclosure, the embodiments of the present disclosure further provide a terminal device. FIG. 3 is a composition structure diagram of a terminal device according to an embodiment of the present disclosure. As shown in FIG. 3, the terminal device 20 includes: a communication unit 21, configured to send domain resource indication information. Herein, the time domain resource indication information may be configured to indicate a transmission period and the number of time domain resource units.

The transmission period includes: a transmission period combination, and the number of time domain resource units is configured to indicate the number Nᵢ of available time slots in each transmission period. Herein, Nᵢ=Mᵢ*Kᵢ, Mᵢ is the number of time domain resource units, the time domain resource unit includes Kᵢ time slots, a subcarrier spacing corresponding to the Kᵢ time slots is F, and the Kᵢ is a predefined positive integer.

If the transmission period combination does not belong to a first transmission period combination set, Ki=1 and F is a first value.

If the transmission period combination belongs to the first transmission period combination set, Kᵢ is a predefined positive integer greater than 1 and F is the first value, or, Kᵢ=1 and F is a second value.

In some optional embodiments of the present disclosure, which are not covered by the claims, if the transmission period combination does not belong to a first transmission period combination set, Kᵢ=1 and F is the first value.

If the transmission period combination belongs to the first transmission period combination set, and a first transmission period and a second transmission period in the transmission period combination are the same, Kᵢ is a predefined positive integer greater than 1 and F is the first value, or, Kᵢ=1 and F is the second value.

If the transmission period combination belongs to the first transmission period combination set, and the first transmission period and the second transmission period in the transmission period combination are different, K₁ corresponding to the first transmission period is equal to 1 and F is the first value, K₂ corresponding to the second transmission period is a predefined positive integer greater than 1 and F is the first value, or, K₂ corresponding to the second transmission period is equal to 1 and F is the second value.

In some optional embodiments of the present disclosure, if a frequency point of a serving cell where the terminal device is located is less than or equal to 6GHz or the subcarrier spacing f of a SL SSB carrying the time domain resource indication information is less than or equal to the preset subcarrier spacing f1, Kᵢ=1 and F is the second value.

If the frequency point of the serving cell where the terminal device is located is greater than 6GHz or the subcarrier spacing f of the SL SSB carrying the time domain resource indication information is greater than the preset subcarrier spacing f1, Kᵢ=f/f1 and F is the first value, or, Kᵢ=1 and F is the second value.

In some optional embodiments of the present disclosure, if the frequency point of the serving cell where the terminal device is located is less than or equal to 6GHz or the subcarrier spacing f of the SL SSB carrying the time domain resource indication information is less than or equal to the preset subcarrier spacing f1, Kᵢ=1 and F is the second value.

If the frequency point of the serving cell where the terminal device is located is greater than 6GHz or the subcarrier spacing f of the SL SSB carrying the time domain resource indication information is greater than the preset subcarrier spacing f1, and the transmission period combination does not belong to the first transmission period combination set, Kᵢ=1 and F is the first value.

If the frequency point of the serving cell where the terminal device is located is greater than 6GHz or the subcarrier spacing f of the SL SSB carrying the time domain resource indication information is greater than the preset subcarrier spacing f1, and the transmission period combination belongs to the first transmission period combination set, Kᵢ=f/f1 and F is the first value, or, Kᵢ=1 and F is the second value.

In some optional embodiments of the present disclosure, if the frequency point of the serving cell where the terminal device is located is less than or equal to 6GHz or the subcarrier spacing f of the SL SSB carrying the time domain resource indication information is less than or equal to the preset subcarrier spacing f1, Kᵢ=1 and F is the second value.

If the frequency point of the serving cell where the terminal device is located is greater than 6GHz or the subcarrier spacing f of the SL SSB carrying the time domain resource indication information is greater than the preset subcarrier spacing f1, and the transmission period combination does not belong to the first transmission period combination set, Kᵢ=1 and F is the first value.

If the frequency point of the serving cell where the terminal device is located is greater than 6GHz or the subcarrier spacing f of the SL SSB carrying the time domain resource indication information is greater than the preset subcarrier spacing f1, the transmission period combination belongs to the first transmission period combination set, and a first transmission period and a second transmission period in the transmission period combination are the same, Kᵢ=f/f1 and F is the first value, or, Kᵢ=1 and F is the second value.

If the frequency point of the serving cell where the terminal device is located is greater than 6GHz or the subcarrier spacing f of the SL SSB carrying the time domain resource indication information is greater than the preset subcarrier spacing f1, the transmission period combination belongs to the first transmission period combination set, and the first transmission period and the second transmission period in the transmission period combination are different, K₁ corresponding to the first transmission period is equal to 1 and F is the first value, K₂ corresponding to the second transmission period is equal to f/f1 and F is the first value, or, K₂ corresponding to the second transmission period is equal to 1 and F is the second value.

In some optional embodiments of the present disclosure, the first transmission period is less than the second transmission period.

In some optional embodiments of the present disclosure, the preset subcarrier spacing f1 is equal to 60KHz.

In some optional embodiments of the present disclosure, the first transmission period combination set includes at least part of the following transmission period combinations: 10ms transmission period and 10ms transmission period, 5ms transmission period and 5ms transmission period, 1ms transmission period and 4ms transmission period, 4ms transmission period and 1ms transmission period, 2ms transmission period and 3ms transmission period, 3ms transmission period and 2ms transmission period, 1ms transmission period and 3ms transmission period, 3ms transmission period and 1ms transmission period, 2ms transmission period and 2ms transmission period.

In some optional embodiments of the present disclosure, the first value is greater than the second value.

The first value is 120 KHz, and the second value is 60 KHz.

In some optional embodiments of the present disclosure, the resource indication information is also configured to indicate the number of available symbols in the transmission period corresponding to the number of available time slots being 0.

In some optional embodiments of the present disclosure, the first transmission period combination set is an empty set.

In some optional embodiments of the present disclosure, the communication unit 21 is configured to send the time domain resource indication information through PSBCH.

In the embodiment of the present disclosure, the communication unit 21 in the terminal device may be implemented by a communication module (including: basic communication suite, an operating system, a communication module, a standardized interface and a protocol, etc.) and a transceiver antenna in practical application.

It is to be noted that the terminal device provided by the above embodiments is only exemplified by the division of the above program modules when performing resource indication. In practice, the above-mentioned processing assignment may be completed by different program modules as required, that is, the internal structure of the terminal device is divided into different program modules to complete all or part of the above-described processing. In addition, the terminal device provided by the embodiments and the resource configuration indication method embodiment belong to the same concept, and the detailed implementation process thereof is detailed in the method embodiment and is not repeated here.

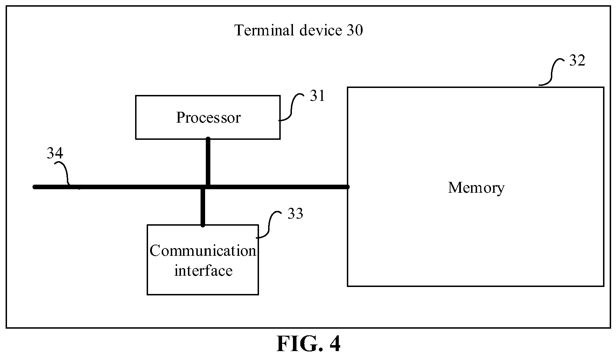

Based on the hardware implementation of the above program modules, and in order to implement the method of the embodiments of the present disclosure, the embodiments of the present disclosure further provide a terminal device. FIG. 4 is a composition structure diagram of hardware of a terminal device according to an embodiment of the disclosure. As shown in FIG. 4, the terminal device 30 includes a memory 32, a processor 31 and a computer program which is stored on the memory 32 and may run on the processor 31. When executing the program, the processor 31 implements the steps of the resource configuration indication method according to the embodiments of the disclosure.

In the embodiment, the terminal device 30 further includes a communication interface 33. It is to be understood that various components in the terminal device 30 are coupled together through a bus system 34. It is to be understood that the bus system 43 is configured to implement the connection communication between these components. The bus system 43 further includes a power bus, a control bus and a status signal bus in addition to a data bus. However, for clarity, the various buses are designated as the bus system 34 in FIG. 4.

It is to be understood that the memory 32 may be a volatile memory or a non-volatile memory, or may include both the volatile and non-volatile memories. Herein, the non-volatile memory may be a Read Only Memory (ROM), a Programmable ROM (PROM), an Erasable PROM (EPROM), an Electrically EPROM (EEPROM), a Ferromagnetic Random Access Memory (FRAM), a Flash Memory, a magnetic surface memory, an optical disk, or a Compact Disc-ROM (CD-ROM). The magnetic surface memory may be a magnetic disk memory or a magnetic tape memory. The volatile memory may be a Random Access Memory (RAM), which is used as an external cache. By way of example, but not limitation, many forms of RAM are available, such as a Static RAM (SRAM), a Synchronous SRAM (SSRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), and a Direct Rambus RAM (DRRAM). The memory 32 described in the embodiments of the present disclosure is intended to include, but not limited to, these and any other suitable types of memory.

The methods disclosed in the embodiments of the present disclosure described above may be applied to the processor 31 or implemented by the processor 31. The processor 31 may be an integrated circuit chip with signal processing capabilities. In an implementation process, each step of the method may be completed by an integrated logical circuit of hardware in the processor 31 or an instruction in a software form. The processor 31 described above may be a general-purpose processor, a Digital Signal Processor (DSP), or other programmable logic devices, discrete gates or transistor logic devices, discrete hardware components, etc. Various methods, steps, and logic block diagrams disclosed in the embodiments of the present disclosure may be implemented or executed by the processor 31. The general-purpose processor may be a microprocessor or any conventional processor, etc. The steps of the method disclosed in combination with the embodiment of the present application may be directly embodied as a hardware decoding processor for execution and completion, or a combination of hardware and software modules in the decoding processor for execution and completion. The software module may be located in a storage medium, which is located in the memory 32, and the processor 31 reads information in the memory 32, and completes the steps of the foregoing method in combination with hardware.

In an exemplary embodiment, the terminal device 30 may be implemented by one or more Application Specific Integrated Circuits (ASICs), DSPs, Programmable Logic Devices (PLDs), Complex Programmable Logic Devices (CPLDs), FPGAs, general purpose processors, controllers, MCUs, Microprocessors, or other electronic components, and is configured to execute the foregoing method.

In the exemplary embodiment, the embodiments of the present disclosure also provide a computer-readable storage medium, such as a memory 32 including a computer program, which may be executed by the processor 31 of the terminal device 30 to complete the steps of the foregoing method. The computer-readable storage medium may be the memory such as the FRAM, the ROM, the PROM, the EPROM, the EEPROM, the Flash Memory, the magnetic surface memory, the optical disk, or CD-ROM, and may also be various devices including one or any combination of the above memories, such as a mobile phone, a computer, a tablet device and a personal digital assistant.

The embodiments of the disclosure further provide a computer-readable storage medium, on which a computer program is stored. When executed by a processor, the program implements the steps of the resource configuration indication method according to the embodiments of the disclosure.

The methods disclosed in several method embodiments provided in the present application may be arbitrarily combined without conflict to obtain a new method embodiment.

The characteristics disclosed in several product embodiments provided in the present application may be arbitrarily combined without conflict to obtain a new product embodiment.

The characteristics disclosed in the several method or device embodiments provided in the present application may be arbitrarily combined without conflict to obtain a new method embodiment or device embodiment.

In the several embodiments provided in the application, it should be understood that the disclosed device and method may be implemented in other manners. The device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each function unit in each embodiment of the disclosure may be integrated into a processing unit, each unit may also serve as an independent unit and two or more than two units may also be integrated into a unit. The integrated unit may be implemented in a hardware form and may also be implemented in form of hardware and software function unit.

Those of ordinary skill in the art can understand that all or part of the steps of the above method embodiments may be completed by a program instructing related hardware. The foregoing program may be stored in a computer readable storage medium. When the program is executed, the steps of the above method embodiments are performed. The foregoing storage medium includes: various media capable of storing program codes such as a mobile storage device, a ROM, a RAM, a magnetic disk, or a optical disk.

Or, the integrated unit of the present disclosure may also be stored in a computer-readable storage medium if being implemented in the form of a software functional module and sold or used as a standalone product. Based on such an understanding, the technical solutions of the embodiments of the disclosure substantially or parts making contributions to the conventional art may be embodied in form of software product, and the computer software product is stored in a storage medium, including a plurality of instructions configured to enable a computer device (which may be a personal computer, a server, a network device or the like) to execute all or part of the steps of the method in each embodiment of the present disclosure. The foregoing storage medium includes: various media capable of storing program codes such as a mobile storage device, a ROM, a RAM, a magnetic disk, or an optical disk.

The above is only the specific implementation mode of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the disclosure shall be subject to the scope of protection of the claims. The invention is defined by the appended claims.

## Claims

1. A resource configuration indication method, the method performed by a terminal device, wherein the method comprises:
sending (101), by the terminal device, time domain resource indication information through a Physical Sidelink Broadcast Channel, PSBCH, wherein the time domain resource indication information is configured to indicate a transmission period combination and a number of time domain resource units and is configured to indicate available transmission resources for sidelink, SL, wherein the SL is a direct communication link between terminal devices,
wherein the transmission period combination is a combination of transmission periods, and the number of time domain resource units is configured to indicate a number Ni of available time slots in each of the transmission periods, wherein Ni=Mi*Ki, Mi is the number of time domain resource units, a time domain resource unit comprises Ki time slots, a value of a subcarrier spacing corresponding to the Ki time slots is F, and Ki is a predefined positive integer, wherein F comprises 120KHz or 60 KHz,
**characterized in that** when the transmission period combination does not belong to a first transmission period combination set, Ki=1 and F is 120KHz, wherein the first transmission period combination set comprises transmission period combinations; and
when the transmission period combination belongs to the first transmission period combination set, Ki is a predefined positive integer greater than 1 and F is 120KHz, or, Ki=1 and F is 60KHz.

2. The method of claim 1, wherein the first transmission period combination set comprises at least part of following transmission period combinations:
10ms transmission period and 10ms transmission period, 5ms transmission period and 5ms transmission period, 1ms transmission period and 4ms transmission period, 4ms transmission period and 1ms transmission period, 2ms transmission period and 3ms transmission period, 3ms transmission period and 2ms transmission period, 1ms transmission period and 3ms transmission period, 3ms transmission period and 1ms transmission period, and 2ms transmission period and 2ms transmission period.

3. A terminal device (20), wherein the terminal device comprises a communication unit (21) configured to send time domain resource indication information through a Physical Sidelink Broadcast Channel, PSBCH, wherein the time domain resource indication information is configured to indicate a transmission period combination and a number of time domain resource units and is configured to indicate available transmission resources for sidelink, SL, wherein the SL is a direct communication link between terminal devices,
wherein the transmission period combination is a combination of transmission periods, and the number of time domain resource units is configured to indicate a number Ni of available time slots in each of the transmission periods, wherein Ni=Mi*Ki, Mi is the number of time domain resource units, a time domain resource unit comprises Ki time slots, a value of a subcarrier spacing corresponding to the Ki time slots is F, and Ki is a predefined positive integer, wherein F comprises 120KHz or 60 KHz,
**characterized in that** when the transmission period combination does not belong to a first transmission period combination set, Ki=1 and F is 120KHz, wherein the first transmission period combination set comprises transmission period combinations; and
when the transmission period combination belongs to the first transmission period combination set, Kᵢ is a predefined positive integer greater than 1, and F is 120KHz; or, Kᵢ=1 and F is 60KHz.

4. The terminal device (20) of claim 3, wherein the first transmission period combination set comprises at least part of following transmission period combinations:
10ms transmission period and 10ms transmission period, 5ms transmission period and 5ms transmission period, 1ms transmission period and 4ms transmission period, 4ms transmission period and 1ms transmission period, 2ms transmission period and 3ms transmission period, 3ms transmission period and 2ms transmission period, 1ms transmission period and 3ms transmission period, 3ms transmission period and 1ms transmission period, and 2ms transmission period and 2ms transmission period.

5. A computer-readable storage medium comprising instructions which, when executed by a computer, cause the computer to carry out the steps of the method of any one of claims 1-2.

## Patentansprüche

1. Ressourcenkonfiguration-Anzeigeverfahren, wobei das Verfahren durch ein Endgerät durchgeführt wird, wobei das Verfahren Folgendes umfasst:
Senden (101), durch das Endgerät, von Zeitbereich-Ressourcenanzeigeinformationen durch einen Physical Sidelink Broadcast Channel (PSBCH), wobei die Zeitbereich-Ressourcenanzeigeinformationen konfiguriert sind, um eine Übertragungszeitraumkombination und eine Anzahl von Zeitbereich-Ressourceneinheiten anzugeben, und konfiguriert ist, um verfügbare Übertragungsressourcen für Sidelink (SL) anzugeben, wobei der SL eine direkte Kommunikationsverbindung zwischen Endgeräten ist,
wobei die Übertragungszeitraumkombination eine Kombination aus Übertragungszeiträumen ist und die Anzahl von Zeitbereich-Ressourceneinheiten konfiguriert ist, um eine Anzahl Ni von verfügbaren Zeitfenstern in jedem der Übertragungszeiträume anzugeben, wobei Ni=Mi*Ki, Mi die Anzahl von Zeitbereich-Ressourceneinheiten ist, eine Zeitbereich-Ressourceneinheit Ki Zeitfenster umfasst, ein Wert von einem Unterträgerabstand entsprechend den Ki Zeitfenstern F ist, und Ki eine vordefinierte positive Ganzzahl ist, wobei F 120 KHz oder 60 KHz umfasst,
**dadurch gekennzeichnet, dass**, wenn die Übertragungszeitraumkombination nicht zu einem ersten Übertragungszeitraumkombinationssatz gehört, Ki=1 und F 120 KHz ist, wobei der erste Übertragungszeitraumkombinationssatz Übertragungszeitraumkombinationen umfasst; und
wenn die Übertragungszeitraumkombination zu dem ersten Übertragungszeitraumkombinationssatz gehört, Ki eine vordefinierte positive Ganzzahl größer 1 ist und F 120 KHz ist, oder Ki=1 und F 60 KHz ist.

2. Verfahren nach Anspruch 1, wobei der erste Übertragungszeitraumkombinationssatz mindestens einen Teil der folgenden Übertragungszeitraumkombinationen umfasst:
10 ms Übertragungszeitraum und 10 ms Übertragungszeitraum, 5 ms Übertragungszeitraum und 5 ms Übertragungszeitraum, 1 ms Übertragungszeitraum und 4 ms Übertragungszeitraum, 4 ms Übertragungszeitraum und 1 ms Übertragungszeitraum, 2 ms Übertragungszeitraum und 3 ms Übertragungszeitraum, 3 ms Übertragungszeitraum und 2 ms Übertragungszeitraum, 1 ms Übertragungszeitraum und 3 ms Übertragungszeitraum, 3 ms Übertragungszeitraum und 1 ms Übertragungszeitraum, und 2 ms Übertragungszeitraum und 2 ms Übertragungszeitraum.

3. Endgerät (20), wobei das Endgerät eine Kommunikationseinheit (21) umfasst, die konfiguriert ist, um Zeitbereich-Ressourcenanzeigeinformationen durch einen Physical Sidelink Broadcast Channel (PSBCH) zu senden, wobei die Zeitbereich-Ressourcenanzeigeinformationen konfiguriert sind, um eine Übertragungszeitraumkombination und eine Anzahl von Zeitbereich-Ressourceneinheiten anzugeben, und konfiguriert ist, um verfügbare Übertragungsressourcen für Sidelink (SL) anzugeben, wobei der SL eine direkte Kommunikationsverbindung zwischen Endgeräten ist,
wobei die Übertragungszeitraumkombination eine Kombination aus Übertragungszeiträumen ist und die Anzahl von Zeitbereich-Ressourceneinheiten konfiguriert ist, um eine Anzahl Ni von verfügbaren Zeitfenstern in jedem der Übertragungszeiträume anzugeben, wobei Ni=Mi*Ki, Mi die Anzahl von Zeitbereich-Ressourceneinheiten ist, eine Zeitbereich-Ressourceneinheit Ki Zeitfenster umfasst, ein Wert von einem Unterträgerabstand entsprechend den Ki Zeitfenstern F ist, und Ki eine vordefinierte positive Ganzzahl ist, wobei F 120 KHz oder 60 KHz umfasst,
**dadurch gekennzeichnet, dass**, wenn die Übertragungszeitraumkombination nicht zu einem ersten Übertragungszeitraumkombinationssatz gehört, Ki=1 und F 120 KHz ist, wobei der erste Übertragungszeitraumkombinationssatz Übertragungszeitraumkombinationen umfasst; und
wenn die Übertragungszeitraumkombination zu dem ersten Übertragungszeitraumkombinationssatz gehört, Kᵢ eine vordefinierte positive Ganzzahl größer 1 ist und F 120 KHz ist; oder Kᵢ=1 und F 60 KHz ist.

4. Endgerät (20) nach Anspruch 3, wobei der erste Übertragungszeitraumkombinationssatz mindestens einen Teil der folgenden Übertragungszeitraumkombinationen umfasst:
10 ms Übertragungszeitraum und 10 ms Übertragungszeitraum, 5 ms Übertragungszeitraum und 5 ms Übertragungszeitraum, 1 ms Übertragungszeitraum und 4 ms Übertragungszeitraum, 4 ms Übertragungszeitraum und 1 ms Übertragungszeitraum, 2 ms Übertragungszeitraum und 3 ms Übertragungszeitraum, 3 ms Übertragungszeitraum und 2 ms Übertragungszeitraum, 1 ms Übertragungszeitraum und 3 ms Übertragungszeitraum, 3 ms Übertragungszeitraum und 1 ms Übertragungszeitraum, und 2 ms Übertragungszeitraum und 2 ms Übertragungszeitraum.

5. Computerlesbares Speichermedium, das Anweisungen umfasst, die, wenn sie durch einen Computer ausgeführt werden, verursachen, dass der Computer die Schritte des Verfahrens nach einem der Ansprüche 1-2 ausführt.

## Revendications

1. Procédé d'indication de configuration de ressources, le procédé étant réalisé par un dispositif-terminal , dans lequel le procédé comprend
l'envoi (101), par le dispositif-terminal, d'informations d'indication de ressources de domaine temporel par l'intermédiaire d'un Canal de diffusion de liaison latérale physique, « Physical Sidelink Broadcast Channel » PSBCH, dans lequel les informations d'indication de ressources de domaine temporel sont configurées pour indiquer une combinaison de périodes de transmission et un nombre d'unités de ressources de domaine temporel et sont configurées pour indiquer des ressources de transmission disponibles pour une liaison latérale, « SideLink » SL, dans lequel la SL est une liaison de communication directe entre des dispositifs-terminaux,
dans lequel la combinaison de périodes de transmission est une combinaison de périodes de transmission, et le nombre d'unités de ressources de domaine temporel est configuré pour indiquer un nombre Ni d'intervalles temporels disponibles dans chacune des périodes de transmission, dans lequel Ni=Mi*Ki, Mi est le nombre d'unités de ressources de domaine temporel, une unité de ressources de domaine temporel comprend Ki intervalles temporels, une valeur d'un espacement de sous-porteuses correspondant aux Ki intervalles temporels est F, et Ki est un nombre entier positif prédéfini, dans lequel F comprend 120 KHz ou 60 KHz,
**caractérisé en ce que**, lorsque la combinaison de périodes de transmission n'appartient pas à un premier ensemble de combinaisons de périodes de transmission, Ki=1 et F est 120 KHz, dans lequel le premier ensemble de combinaisons de périodes de transmission comprend des combinaisons de périodes de transmission ; et
lorsque la combinaison de périodes de transmission appartient au premier ensemble de combinaisons de périodes de transmission, Ki est un nombre entier positif prédéfini supérieur à 1 et F est 120 KHz, ou, Ki=1 et F est 60 KHz.

2. Procédé de la revendication 1, dans lequel le premier ensemble de combinaisons de périodes de transmission comprend au moins une partie des combinaisons de périodes de transmission suivantes :
période de transmission de 10 ms et période de transmission de 10 ms, période de transmission de 5 ms et période de transmission de 5 ms, période de transmission de 1 ms et période de transmission de 4 ms, période de transmission de 4 ms et période de transmission de 1 ms, période de transmission de 2 ms et période de transmission de 3 ms, période de transmission de 3 ms et période de transmission de 2 ms, période de transmission de 1 ms et période de transmission de 3 ms, période de transmission de 3 ms et période de transmission de 1 ms, et période de transmission de 2 ms et période de transmission de 2 ms.

3. Dispositif-terminal (20), dans lequel le dispositif-terminal comprend une unité de communication (21) configurée pour envoyer des informations d'indication de ressources de domaine temporel par l'intermédiaire d'un canal de diffusion de liaison latérale physique, « Physical Sidelink Broadcast Channel » PSBCH, dans lequel les informations d'indication de ressources de domaine temporel sont configurées pour indiquer une combinaison de périodes de transmission et un nombre d'unités de ressources de domaine temporel et sont configurés pour indiquer des ressources de transmission disponibles pour liaison latérale, « SideLink » SL, dans lequel la SL est une liaison de communication directe entre des dispositifs-terminaux,
dans lequel la combinaison de périodes de transmission est une combinaison de périodes de transmission, et le nombre d'unités de ressources de domaine temporel est configuré pour indiquer un nombre Ni d'intervalles temporels disponibles dans chacune des périodes de transmission, dans lequel Ni=Mi*Ki, Mi est le nombre d'unités de ressources de domaine temporel, une unité de ressources de domaine temporel comprend Ki intervalles temporels, une valeur d'un espacement de sous-porteuses correspondant aux Ki intervalles temporels est F, et Ki est un nombre entier positif prédéfini, dans lequel F comprend 120 KHz ou 60 KHz,
**caractérisé en ce que**, lorsque la combinaison de périodes de transmission n'appartient pas à un premier ensemble de combinaisons de périodes de transmission, Ki=1 et F est 120 KHz, dans lequel le premier ensemble de combinaisons de périodes de transmission comprend des combinaisons de périodes de transmission ; et
lorsque la combinaison de périodes de transmission appartient au premier ensemble de combinaisons de périodes de transmission, Kᵢ est un nombre entier positif prédéfini supérieur à 1, et F est 120 KHz, ou, Kᵢ=1 et F est 60 KHz.

4. Dispositif-terminal (20) de la revendication 3, dans lequel le premier ensemble de combinaisons de périodes de transmission comprend au moins une partie des combinaisons de périodes de transmission suivantes :
période de transmission de 10 ms et période de transmission de 10 ms, période de transmission de 5 ms et période de transmission de 5 ms, période de transmission de 1 ms et période de transmission de 4 ms, période de transmission de 4 ms et période de transmission de 1 ms, période de transmission de 2 ms et période de transmission de 3 ms, période de transmission de 3 ms et période de transmission de 2 ms, période de transmission de 1 ms et période de transmission de 3 ms, période de transmission de 3 ms et période de transmission de 1 ms, et période de transmission de 2 ms et période de transmission de 2 ms.

5. Support de stockage lisible par ordinateur comprenant des instructions qui, lorsqu'elles sont exécutées par un ordinateur, amènent l'ordinateur à réaliser les étapes du procédé de l'une quelconque des revendications 1 et 2.
